Europäisches Patentamt

(19) European Patent Office

Office européen des brevets

(11) Numéro de publication : **0 116 481**
**B1**

(12) FASCICULE DE BREVET EUROPÉEN

(45) Date de publication du fascicule du brevet :
15.04.87

(51) Int. Cl.⁴ : **G 02 B   6/38**

(21) Numéro de dépôt : 84400007.5

(22) Date de dépôt : 04.01.84

(54) **Dispositif de raccordement rapide d'extrémités de fibres optiques.**

(30) Priorité : 05.01.83 FR 8300076

(43) Date de publication de la demande :
22.08.84 Bulletin 84/34

(45) Mention de la délivrance du brevet :
15.04.87 Bulletin 87/16

(84) Etats contractants désignés :
BE CH DE FR GB IT LI NL SE

(56) Documents cités :
WO-A-80 /006 19
CA-A- 1 108 904
FR-A- 2 255 618
GB-A- 2 009 440
US-A- 4 146 301
INTERNATIONAL CONFERENCE ON COMMUNICA-
TIONS, 14-18 juin 1981, Denver, Colorado, vol. 1 of 4,
pages 6.1.1-6.1.8, IEEE, New York, US M.I.
SCHWARTZ: "Design and performance of the FT3
lightguide trunk transmission medium"

(73) Titulaire : **SOCIETE ANONYME DE TELECOMMUNI-
CATIONS**
**41, rue Cantagrel**
**F-75624 Paris Cedex 13 (FR)**

**SOCIETE INDUSTRIELLE DE LIAISONS ELECTRI-
QUES - SILEC**
**64bis, rue de Monceau**
**F-75008 Paris (FR)**

(72) Inventeur : **Caievo, Robert**
**12, rue des Bleuets**
**F-92240 L'Hay les Roses (FR)**
Inventeur : **Dewez, Vincent**
**150, rue Saint Maur**
**F-75011 Paris (FR)**
Inventeur : **Garcia, Marcel**
**3, route de Blémur**
**F-95330 Domont (FR)**

(74) Mandataire : **Martinet & Lapoux**
**62, rue des Mathurins**
**F-75008 Paris (FR)**

## Description

La présente invention concerne un dispositif de raccordement d'extrémités de deux fibres optiques comprenant une embase ayant sur une première grande face une rainure de réception des extrémités des fibres pour aligner et abouter les extrémités des fibres de part et d'autre d'un plan de jonction des faces des extrémités des fibres, et une plaque-ressort coudée ayant de part et d'autre d'un coude une portion flexible au-dessus de la première grande face de l'embase et une seconde portion en contact avec l'embase.

Un dispositif de ce type pour raccorder deux à deux des fibres optiques de deux nappes ou rubans de fibres optiques sur une embase plate ayant plusieurs rainures parallèles est décrit dans la FR-A-2 255 618. En référence aux Fig. 3 et 5 de ce document de brevet, la plaque-ressort coudée peut être considérée comme la combinaison de deux équerres à branches longilignes disposées face à face le long d'une rainure propre à recevoir deux fibres optiques des nappes à abouter. Chaque équerre a une branche flexible parallèle à la rainure, appliquant par pincement un tronçon d'une fibre optique éloigné du plan de jonction des fibres. L'autre branche de l'équerre est perpendiculaire à la rainure, traversée par la fibre optique et simplement encastrée dans une saignée de l'embase. Les branches flexibles des deux équerres ne servent qu'à maintenir les deux fibres dans la rainure. La fixation des extrémités des fibres dans la rainure et le maintien bout-à-bout des fibres dans la rainure sont obtenus au moyen d'une barrette de compression munie d'un revêtement en caoutchouc appliqué au niveau du plan de jonction des fibres au-dessus de la rainure et entre les branches flexibles des équerres. La barrette de compression doit être retirée pour introduire ou retirer les extrémités des fibres dans la rainure, et pour écarter les branches flexibles des équerres. En outre, l'écartement des branches flexibles des équerres peut entraîner le retrait des équerres de l'embase.

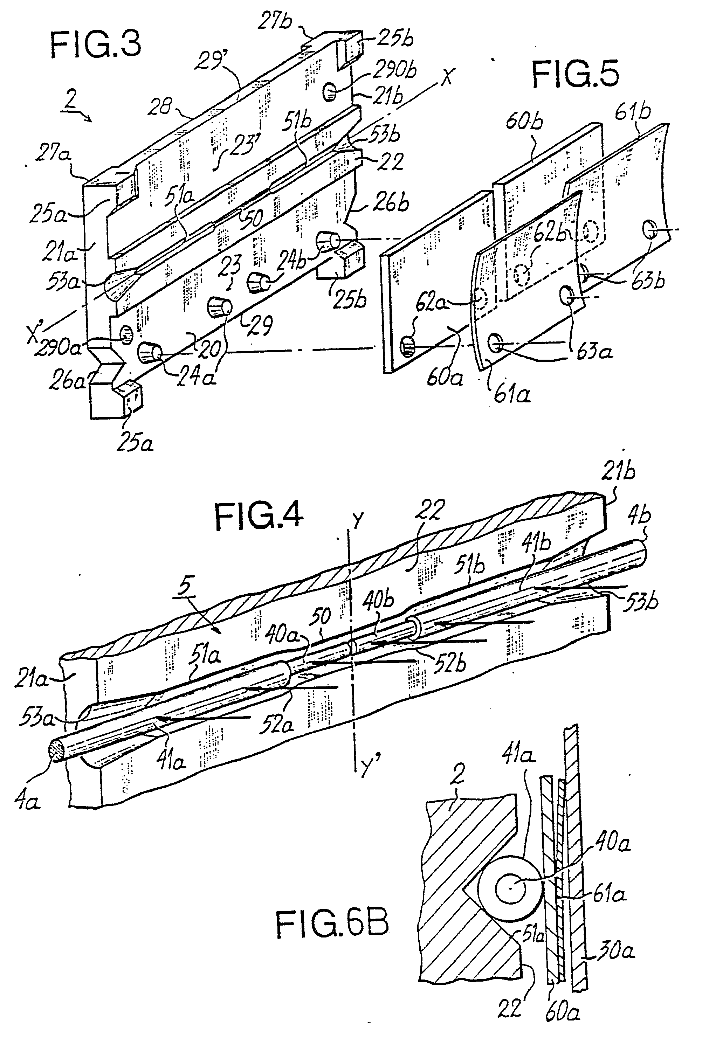

D'autres dispositifs de raccordement de deux nappes ou rubans de fibres optiques comprenant des plaques-ressorts ayant une section en U, analogues à des clips, sont également décrits dans le US-A-4 146 301 en référence à la Fig. 3 et dans l'article M. I. Schwartz, intitulé « Design and Performance of the FT3 lightguide trunk transmission medium », International Conference on Communications, Vol. 1, pages 6.1.1 à 6.1.8, 14-18 juin 1981, Denver, Colorado (US), en référence à la Fig. 6. Les plaques-ressorts en U ne servent pas directement à appliquer les fibres optiques dans des rainures d'une embase plate rainurée, mais servent à assembler les différentes pièces du dispositif de raccordement, telles que les trois pièces d'un couvercle et l'embase, ou des pièces intermédiaires et l'embase composite. Les plaques-ressorts en U ne sont pas fixées à l'embase mais glissent sur l'embase et sur le couvercle ou les pièces intermédiaires pour assembler ces derniers. Là encore, le raccordement des fibres optiques nécessite des opérations de démontage et montage de pièces du dispositif.

En outre, les dispositifs de raccordement connus cités ci-dessus sont relativement encombrants et ne permettent pas le raccordement individuel de deux fibres optiques incluses chacune dans deux câbles à fibres optiques à raccorder.

La présente invention a pour but principal de fournir un dispositif de raccordement de deux fibres optiques permettant un raccordement rapide sans faire appel à un quelconque démontage des pièces du dispositif. Elle vise également à réduire le coût de fabrication du dispositif en réduisant au minimum le nombre de pièces le composant.

A cette fin, un dispositif de raccordement est tel que caractérisé dans la revendication 1.

Selon l'invention, la flexion propre exercée par la première portion de la plaque-ressort sur l'embase et donc sur les extrémités des fibres dans la rainure assure un maintien efficace des fibres dans la rainure de façon à offrir une résistance suffisante à la traction. Le positionnement face à face des extrémités des fibres introduites par glissement dans la rainure entre l'embase et la portion flexible de la plaque-ressort est aussi précis que dans les dispositifs de raccordement connus. L'alignement et l'aboutement des extrémités des fibres dans la rainure sont conservés grâce au pressage des extrémités des fibres par la portion flexible de la plaque-ressort à proximité immédiate du plan de jonction, ce qui assure une transmission des signaux optiques dans les fibres dans de bonnes conditions.

Le raccordement des extrémités préparées des fibres est d'une mise en œuvre simple et rapide puisqu'il ne nécessite que l'écartement du côté libre accessible de la portion flexible de la plaque-ressort coudée par rapport à la face rainurée de l'embase et que l'introduction par glissement des extrémités des fibres dans la rainure.

Un autre avantage du dispositif de raccordement réside en son faible coût de fabrication puisque le dispositif peut être constitué seulement par deux pièces, à savoir l'embase et la plaque-ressort. En effet la fixation de la seconde portion de la plaque-ressort coudée à l'embase peut être réalisée sans apport de pièces supplémentaires. Par exemple, la plaque-ressort a une section en U ayant des branches formant les première et seconde portions de la plaque-ressort et enserrant les grandes faces de l'embase. La branche formant la seconde portion peut enserrer deux chants opposés de l'embase sensiblement parallèles à la rainure et est ainsi solidaire de l'embase même lorsque la branche flexible est écartée de l'embase.

Selon un autre aspect de l'invention, le dispositif a une configuration tel qu'un boîtier plat très mince, ayant une épaisseur de l'ordre de 3 mm.

L'empilement de plusieurs tels boîtiers deux à deux face à face constitue un dispositif de raccordement multifibre. Le dispositif de raccordement multifibre peut servir à raccorder plusieurs câbles multifibres ou à constituer une colónne d'un répartiteur d'un central téléphonique raccordant des câbles optiques à des jarretières sous la forme de fibres optiques.

Comme il est connu, le dispositif contient un gel au moins au niveau de la jonction des fibres afin d'assurer la continuité d'indice de réfraction. Cependant, selon l'invention, ce gel ne coule pas par son propre poids et ne s'échappe pas par les ouvertures du dispositif de raccordement, ce qui permet plusieurs introductions et retraits des fibres sans apport de gel, le gel n'étant pas entraîné vers l'extérieur par les fibres. Le gel est également auto-nettoyant et retient des poussières apposées malencontreusement aux extrémités des fibres lors de l'introduction des extrémités des fibres dans le dispositif.

D'autres avantages et caractéristiques de la présente invention apparaîtront plus clairement à la lecture de la description suivante de plusieurs modes de réalisation en référence aux dessins annexés correspondants, dans lesquels :

la Figure 1 est une vue de face d'un dispositif de raccordement des extrémités de deux fibres optiques avec deux plaques ressorts ;

la Figure 2 est une vue en coupe le long de la ligne II-II de la Fig. 1 sans plaquettes, lamelles et outil d'écartement ;

la Figure 3 est une vue en perspective de l'embase du dispositif de raccordement ;

la Figure 4 est une vue détaillée de la rainure centrale de l'embase contenant les extrémités alignées et aboutées des deux fibres optiques ;

la Figure 5 est une vue en perspective de deux paires de plaquette et lamelle galbée intermédiaires entre l'embase et la branche flexible libre de la plaque-ressort ;

la Figure 6A est une vue en coupe prise le long de la ligne II-II de la Fig. 1 montrant le dispositif de raccordement avec les plaquettes et lamelles ;

la Figure 6B est une section d'un tronçon rainuré latéral de la rainure centrale montrant le pressage d'un tronçon gainé d'une fibre optique par la branche flexible libre de la plaque-ressort par l'intermédiaire d'une plaquette et d'une lamelle ;

la Figure 7 est une vue en coupe analogue à la Fig. 6A montrant l'écartement de la branche flexible libre de la plaque-ressort par rapport à la grande face rainurée de l'embase au moyen d'un outil d'écartement en vue de l'introduction d'une extrémité de fibre dans la rainure ;

les Figures 8A et 8B sont des vues en perspective d'outils d'écartement ;

la Figure 9 est une vue en perspective d'un autre dispositif de raccordement n'ayant qu'une plaque-ressort ;

la Figure 10 est une vue en perspective éclatée d'une boîte de raccordement ouverte contenant deux dispositifs de raccordement élémentaires selon la Fig. 1 ;

la Figure 11 est une vue en perspective éclatée d'une autre boîte de raccordement ouverte contenant un dispositif de raccordement élémentaire selon la Fig. 1 ; et,

la Figure 12 est une vue en perspective d'un support pour empiler des dispositifs de raccordement élémentaires selon la Fig. 1 en vue de former un dispositif de raccordement multifibre.

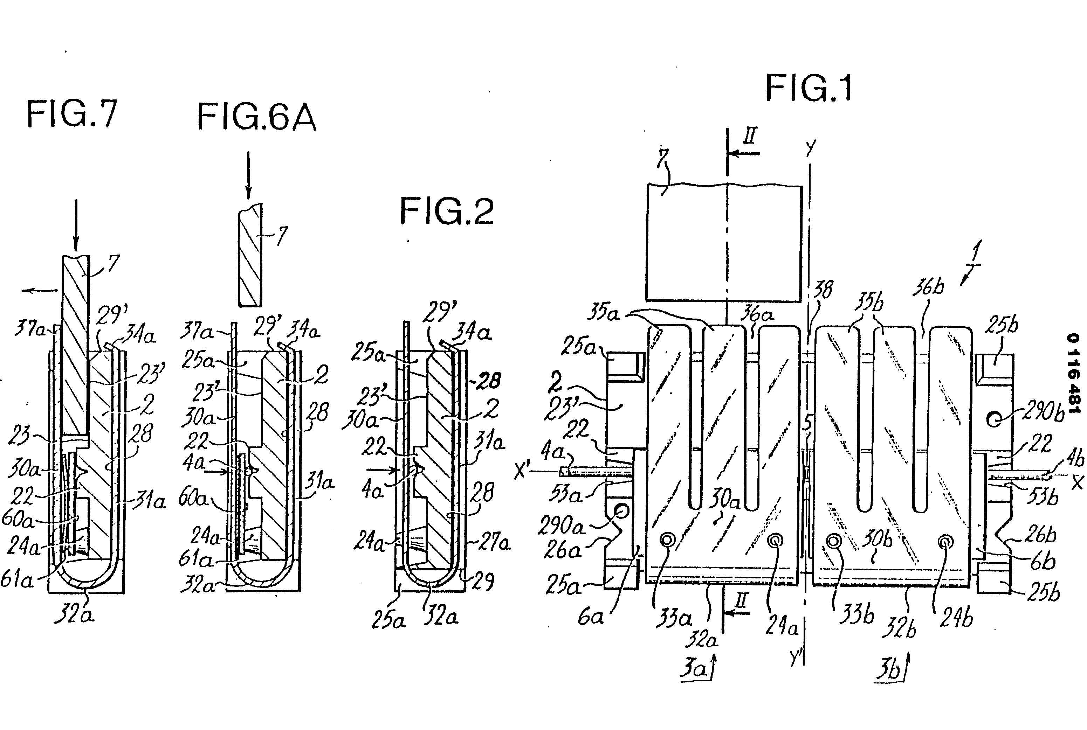

Selon le mode de réalisation montré aux Fig. 1 et 2, le dispositif de raccordement a un aspect général analogue à un boîtier compact parallélépipédique mince 1 ayant une épaisseur de quelques millimètres. Le boîtier 1 est composé essentiellement d'une embase parallélépipédique mince 2 et de deux plaques-ressorts 3a et 3b ayant une section transversale en U.

Le boîtier 1 est représenté dans la Fig. 1 en position verticale longitudinale. Le boîtier 1 est symétrique par rapport à son petit axe central transversal vertical Y'Y qui définit le plan de jonction des faces des extrémités de deux fibres optiques 4a et 4b à raccorder. Dans la suite, des éléments, portions ou parties symétriques sont désignés par un même numéro de référence auquel est adjoint l'indice a pour la moitié à gauche de l'axe Y'Y ou l'indice b pour la moitié à droite de l'axe Y'Y, comme montré à la Fig. 1.

L'embase 2 constitue la pièce maîtresse du boîtier 1 et également un moyen pour supporter des extrémités des fibres optiques 4a et 4b. Le long d'un axe longitudinal et horizontal X'X sensiblement central au boîtier est ménagée une rainure composite rectiligne 5 dans une grande face avant 20 de l'embase 2 interne au boîtier 1, comme montré aux Fig. 3 et 4. La rainure composite 5 a une section en vé ou en vé épointé. D'une manière générale, chaque tronçon de la rainure 5 comporte deux génératrices qui sont distantes l'une de l'autre d'un angle de 60° à 120° par rapport à l'axe longitudinal X'X et contre lesquelles s'appuie un tronçon de fibre optique.

La rainure 5 est principalement composée, selon le mode de réalisation illustré, d'un tronçon rainuré central 50 et de deux tronçons rainurés latéraux 51a et 51b ayant des sections plus grandes que la section du tronçon central 50 et prolongeant les extrémités du tronçon central 50. Comme détaillé dans la Fig. 4, le tronçon rainuré 50 est propre à recevoir sur une longueur typiquement de 8 mm, des tronçons dégainés 40a et 40b aux extrémités des fibres 4a et 4b en vue de leur alignement le long de l'axe longitudinal X'X et de l'aboutement de leur face extrême dans le plan de jonction défini par l'axe vertical Y'Y. Chaque tronçon rainuré latéral 51a et 51b est plus profond que le tronçon rainuré central 50 et reçoit un tronçon gainé 41a, 41b de la fibre respective 4a, 4b. Les profondeurs des tronçons rainurés 50, 51a et 51b sont prévues de telle sorte que, lorsque les tronçons dégainés 40a et 40b sont appliqués à fond le long de deux génératrices du tronçon central 50 et lorsque les tronçons gainés 41a et 41b sont appliqués à fond le long de deux génératrices des tronçons latéraux 51a et 51b, les

axes de cœur des fibres optiques 4a et 4b sont colinéaires et les extrémités des fibres sont saillantes sur la grande face avant 20 de l'embase 2 pour environ un tiers du diamètre de cœur des fibres.

La rainure composite 5 comprend également deux dégagements 52a et 52b qui forment les transitions des sections différentes du tronçon rainuré central 50 et des tronçons rainurés latéraux 51a et 51b, et deux évasements 53a et 53b qui agrandissent la section des tronçons rainurés latéraux 51a et 51b débouchant vers les petits chants latéraux verticaux 21a et 21b de l'embase 2. Chaque dégagement 52a, 52b reçoit généralement la transition entre le tronçon dégainé 40a, 40b et le tronçon gainé 41a, 41b de la fibre optique respective 4a, 4b. Les évasements 53a et 53b sont destinés à faciliter l'introduction des extrémités des fibres dans la rainure 5.

En fait, comme montré aux Fig. 2 et 3, la rainure composite 5 est pratiquée dans une languette longitudinale 22 saillante sur la grande face avant 20 de l'embase. L'une des surfaces longitudinales concomitantes 23 et 23' en retrait par rapport à la languette 22 permet d'introduire un outil pour dégager l'une des branches libres de plaques-ressorts 3a et 3b, comme on le verra dans la suite.

L'embase 2 présente également deux paires de saillies tronconiques de centrage 24a et 24b alignées longitudinalement sur la surface inférieure 23, deux paires de bossages prismatiques 25a et 25b aux quatre coins de la grande face avant 20, deux encoches en vé 26a et 26b ménagées en partie basse des chants latéraux 21a et 21b, et deux petites languettes latérales verticales 27a et 27b aux extrémités de la grande face arrière 28 de l'embase 2. Le rôle de ces différentes parties de l'embase 2 sera expliqué dans la suite.

On décrit maintenant une plaque-ressort telle que 3a relative à la fibre 4a. L'autre plaque-ressort 3b est identique et coplanaire à la plaque-ressort 3a et joue un rôle analogue pour la fibre 4b. Les plaques-ressorts 3a et 3b sont disposées symétriquement par rapport au plan de jonction Y'Y et à proximité immédiate du plan de jonction Y'Y.

Comme déjà dit, la plaque 3a a une section transversale en U qui définit une première branche verticale avant 30a, jouant le rôle de portion flexible, et une seconde branche verticale arrière 31a, jouant le rôle de portion fixée à l'embase tel qu'un arrêtoir. Les branches 30a et 31a sont solidaires par un coude inférieur à 180° 32a de la section en U. La plaque 3a est introduite par le chant inférieur longitudinal 29 de l'embase 2 en écartant la branche flexible 30a afin de franchir les saillies de centrage 24a et 24b, et en glissant la seconde branche 31a contre la grande face arrière 28 de l'embase jusqu'à ce que des trous de centrage 33a dans la branche 30a reçoivent les saillies de centrage 24a. La plaque 3a enserre l'embase 2 par la branche avant 30a qui est appliquée par sa flexion propre vers la grande face avant 20 de l'embase et particulièrement contre la languette longitudinale 22, et par la branche arrière 31a qui est appliquée par sa flexion propre contre la grande face arrière 28 de l'embase. Le coude 32a de la plaque 3a bute contre le chant inférieur 29 de l'embase et est ainsi parallèle à la rainure 5.

Ainsi la plaque-ressort 3a recouvre les grandes faces 20 et 28 dans la moitié de gauche de l'embase, entre l'ensemble à languette 27a et à bossages 25a et l'axe Y'Y. De même la plaque-ressort 3b recouvre les grandes faces 20 et 28 dans la moitié de droite de l'embase, entre l'ensemble à languette 27b et à bossage 25b et l'axe Y'Y. Les plaques-ressorts 3a et 3b sont alors contenues dans le boîtier 1, c'est-à-dire dans l'enveloppe de l'embase 2 délimitée par les languettes 27a et 27b et les bossages 25a et 25b ayant des épaisseurs plus grandes que les épaisseurs des plaques-ressorts 3a et 3b, comme montré à la Fig. 2. La hauteur des bossages inférieurs 25a et 25b est plus grande que le rayon des coudes 32a et 32b des plaques-ressorts 3a et 3b.

Dans le bas de la branche avant flexible 30a, les deux trous 33a s'appuient sur les extrémités effilées des deux saillies tronconiques respectives 24a, ce qui immobilise verticalement au moins la branche 30a sur l'embase 2. Le bord supérieur libre 34a de la branche arrière 31a est rabattu vers le chant supérieur longitudinal 29' de l'embase 2, comme montré à la Fig. 2, afin que l'embase soit véritablement emprisonnée dans la plaque 3a grâce à l'enserrement des chants 29 et 29' de l'embase par le coude 32a et le bord 34a de la plaque-ressort 3a. La branche arrière 31a reste plaquée contre la face arrière 28 lorsque la branche avant 30a est écartée de la face avant 20 et demeure ainsi fixée à l'embase.

La branche avant 30a de la plaque 3a présente en partie supérieure par exemple trois sous-branches 35a qui s'étendent perpendiculairement à la rainure 5 au moins jusqu'à la surface longitudinale 23 sous-jacente à la languette 22 et qui sont séparées par des petites fentes verticales 36a. Les sous-branches 35a exercent des pressions individuelles au moins contre le tronçon gainé 41a de la fibre optique respective 4a et le tronçon dégainé 40a de la fibre 4a à proximité immédiate du plan Y'Y, contenus dans les tronçons rainurés 51a et 50, et permettent ainsi d'épouser sensiblement les surfaces respectives en regard de la face avant 20 de l'embase.

En référence aux Fig. 5, 6A et 6B, une plaquette rectangulaire plate mince 60a et une lamelle rectangulaire galbée 61a sont superposées et intercalées en partie inférieure du boîtier 1, entre la face avant 20 et la branche avant libre 30a pour faciliter l'introduction de la fibre 4a. La lamelle 61a est logée entre la branche avant 30a et la plaquette 60a qui est en regard de la languette 22 et de la face avant 20. La face convexe de la lamelle 61a pousse la plaquette 60a vers la rainure 5 dans la languette 22. La plaquette 60a et la lamelle 61a comportent également des trous de centrage 62a et 63a coopérant avec les deux saillies respectives 24a. La plaquette 60a et la lamelle 61a ont une hauteur sensiblement égale à la moitié de la face avant 20 afin que la plaquette 60a plaque la fibre 4a dans les tronçons rainurés 51a et 50.

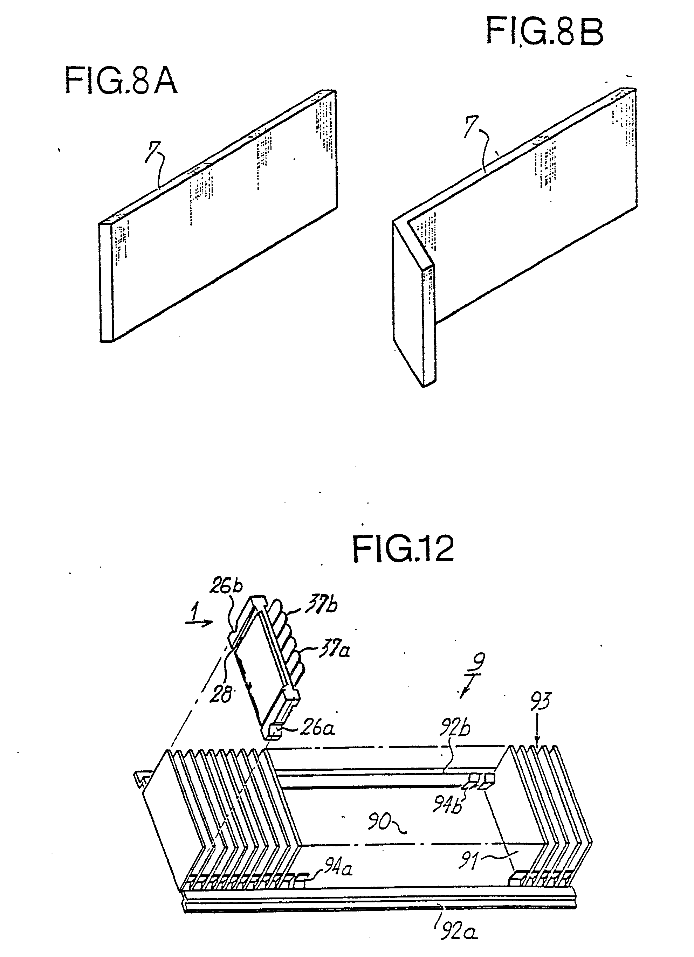

Comme montré aux Fig. 6A et 7, le côté supérieur libre 37a de la branche avant 30a est accessible au-dessus du chant longitudinal chanfreiné supérieur 29' de l'embase 2 afin d'introduire un outil 7 entre la surface avant supérieure 23' de l'embase et le bord 37a du bras 30a pour écarter de quelques centièmes de millimètre la branche flexible 30a jouant le rôle de lame-ressort. Comme montré aux Fig. 8A et 8B, l'outil 7 est une simple plaque qui a une largeur sensiblement égale à la branche 30a. Une extrémité droite (Fig. 8A) ou de préférence coudée (Fig. 8B) de l'outil 7 permet par basculement en levier d'écarter le bord supérieur 37a de la branche 30a à l'encontre de sa flexion propre. La lamelle 61a se galbe et pousse la plaquette 60a contre la languette 22 incluant la rainure 5. La flexion de la lamelle 61a est faible, ce qui permet de guider la fibre 4a entre la plaquette 60a et les tronçons rainurés 51a et 50 en évitant toute courbure de l'extrémité de la fibre. La fibre introduite 4a est capable de pousser de quelques μm la plaquette 60a.

D'autres variantes de structure et d'agencement des différentes pièces du dispositif de raccordement élémentaire décrit ci-dessus peuvent être prévues.

Lorsque la concentricité de la gaine de protection des fibres peut être conservée comme référence d'appui, la rainure 5 a une section constante sur toute sa longueur, sensiblement égale à la demi-section des tronçons rainurés latéraux 51a et 51b.

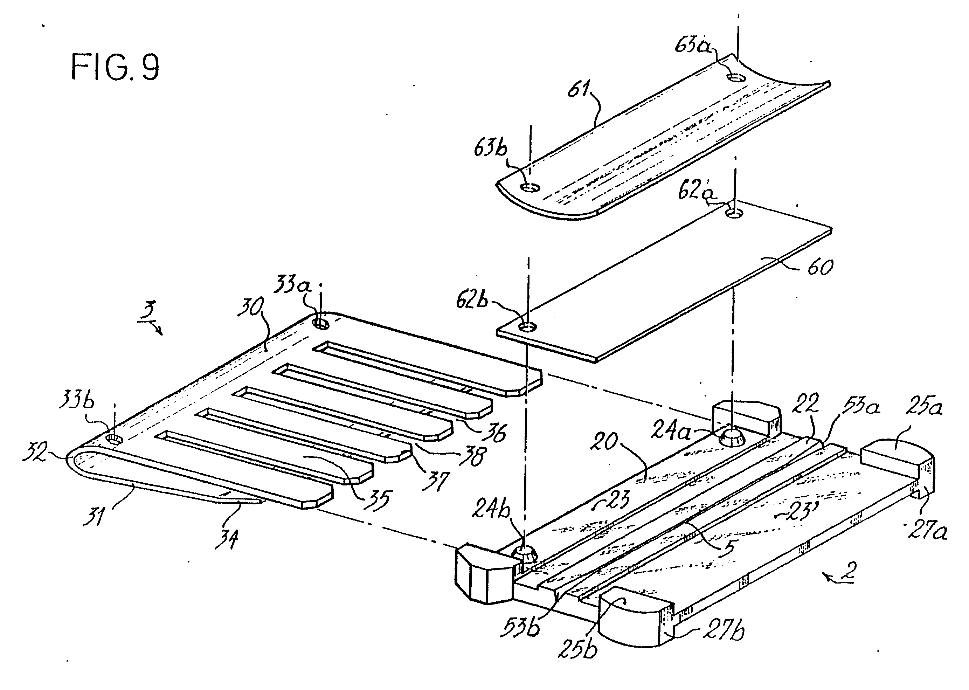

Les deux plaques-ressorts en U 3a et 3b analogues à des clips modifiés peuvent être remplacées par une unique plaque-ressort 3 en U, comme montré à la Fig. 9. Les deux plaquettes 60a et 60b et les deux lamelles 61a et 61b sont remplacées par une unique plaquette mince 60 et une unique lamelle galbée 61 introduites entre la face avant 20 de l'embase et la branche avant libre 35 de la plaque-ressort unique 3. L'unique plaque-ressort 3 recouvre alors les deux grandes faces 20 et 28 de l'embase 2 entre l'ensemble à bossages 25a et languette 27a et l'ensemble à bossages 25b et languette 27b. Dans ce cas, deux sous-branches avant centrales 35 sont séparées par une fente verticale 38 centrée sur l'axe central Y'Y et ayant une largeur très petite afin de permettre l'écartement d'une branche et l'introduction de l'extrémité de la fibre correspondante sans déplacer l'autre branche et afin de presser individuellement les extrémités des deux fibres au moins à proximité immédiate de l'axe Y'Y.

Au lieu que chaque plaque-ressort telle que 3a soit à section en U, une plaque-ressort ayant une section sensiblement en équerre sans branche arrière peut être prévue. Selon une première variante, le petit côté de l'équerre remplaçant le coude 32a est encastré dans une lumière parallèle au chant inférieur 29 de l'embase et au-dessus de celui-ci. Le bord libre du petit côté contigu au coude de l'équerre est replié à 90° contre la grande face arrière 28 de l'embase afin de fixer la plaque-ressort à l'embase. Selon une seconde variante, le petit côté de l'équerre est fixé au chant inférieur 29 par tout moyen de fixation tel que rivet, soudure ou vis.

D'une manière générale, les pièces 2, 3a, 3b, 60a et 60b, 61a et 61b peuvent être réalisées industriellement en série. L'embase 2 et les plaquettes 60a, 60b peuvent être obtenues par exemple par moulage ou estampage et peuvent être en matière métallique, thermoplastique, thermodurcissable ou en céramique par exemple. Les plaques-ressorts 3a, 3b et les lamelles galbées 61a, 61b peuvent être également en métal ou en matière plastique. De préférence, les matières des pièces du dispositif de raccordement ont un coefficient de dilatation sensiblement égale à celui des fibres optiques ce qui assure que la jonction des fibres ne peut pas être perturbée par les variations notamment de température et d'humidité du milieu ambiant.

Le dégainage éventuel des fibres puis la coupe des fibres en fonction des longueurs des tronçons rainurés 50 et 51a, 51b sont réalisés convenablement et d'une manière connue. Avant la mise en place des fibres, un produit assurant la continuité d'indice de réfraction dans le plan de jonction Y'Y des faces des extrémités des fibres 4a et 4b remplit l'espace entre la languette 22 de la face avant 20 de l'embase 2 et les branches libres 30a et 30b des plaques-ressorts 3a et 3b. Le produit adaptateur d'indice peut être une huile ou une graisse silicone ou de préférence un gel silicone. Le gel silicone a une dureté suffisamment faible pour permettre l'introduction et la mise en place des extrémités des fibres sans aucune difficulté. Le gel ne coule pas sous son propre poids ; après injection dans le boîtier 1, le gel ne s'échappe pas par les ouvertures du boîtier, telles que 53a, 53b, 36a, 36b et 38.

Lors de l'introduction des fibres 4a et 4b dans la rainure 5, le gel silicone est automatiquement intercalé entre les faces en regard aux extrémités des deux fibres. L'indice de réfraction du gel silicone a pratiquement la même valeur que l'indice de réfraction des fibres ce qui réalise une jonction sans discontinuité d'indice de réfraction.

Le gel silicone est également auto-nettoyant, propriété que ne possède pas une huile ou graisse silicone. Si une poussière est malencontreusement recueillie par la face de l'extrémité d'une fibre avant son introduction dans le boîtier, alors le gel, grâce à son pouvoir d'adhésion, essuie l'extrémité de la fibre lors de son introduction dans le boîtier et donc dans le gel, et retient la poussière.

Une autre caractéristique du gel silicone consiste en une « auto-cicatrisation » lorsque les fibres sont retirées du boîtier. La cohésion du gel est plus forte que l'adhésion du gel sur la surface des fibres. Lors du retrait des fibres plongées et entourées intimement dans le gel, le gel se referme dans l'espace créé par le retrait des fibres, et les fibres ne gardent aucune trace du gel. Le gel n'est pas entraîné vers l'extérieur par les fibres.

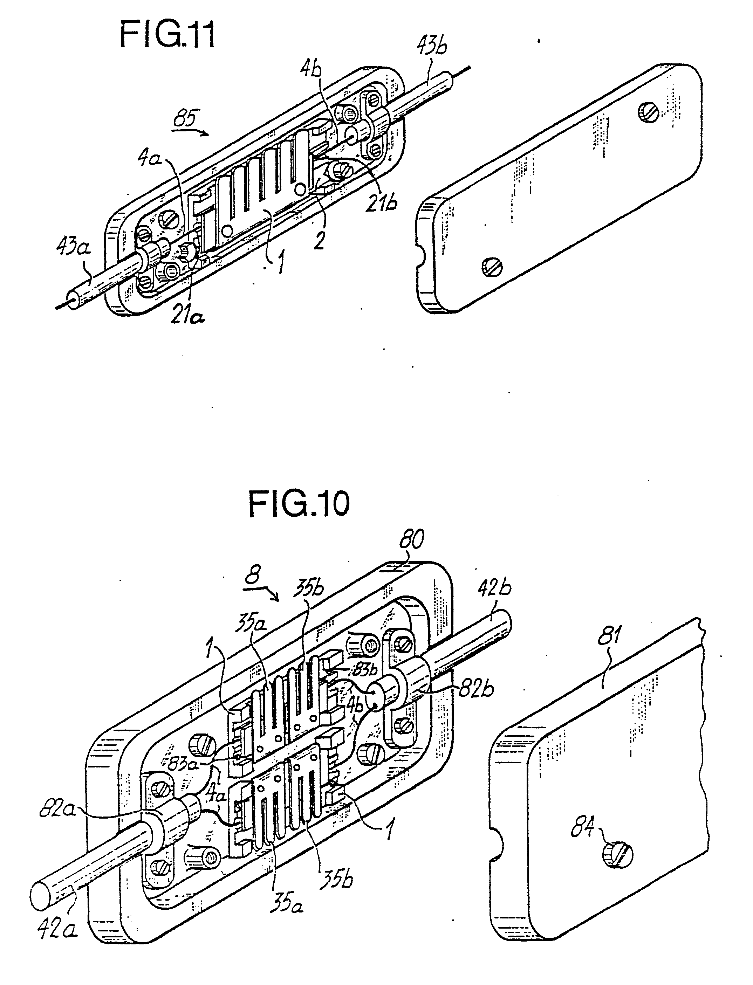

La Fig. 10 montre un dispositif pour raccorder deux câbles 42a et 42b ayant chacun deux fibres optiques 4a, 4b. Il comprend une boîte parallélépipédique creuse 8 composée d'un fond 80 et d'un couvercle 81. Aux extrémités de l'axe longitudinal du fond sont ancrées les extrémités gainées des câbles par deux demi-colliers 82a et 82b qui sont fixés par vis sur la paroi interne du fond 80. Au centre de la face interne du fond 80, deux boîtiers de raccordement élémentaires 1 sont fixés chacun au moyen de deux vis 83a et 83b traversant des trous 290a et 290b (Fig. 1) pratiqués dans le pourtour de l'embase 2 au niveau des languettes latérales 27a et 27b. Chacun des boîtiers 1 raccorde une fibre optique 4a du câble 42a à une fibre optique 4b de l'autre câble 42b. Les languettes 27a, 27b des grandes faces arrière 28 des embases sont plaquées contre la paroi interne du fond 80. Les boîtiers sont juxtaposés verticalement tête-bêche afin d'accéder aisément aux bords 37a, 37b des sous-branches avant 35a, 35b au moyen d'un outil d'écartement 7 tel que l'outil coudé montré à la Fig. 8B. Après raccordement, la boîte 8 est fermée hermétiquement en appliquant le pourtour du couvercle 81 sur celui du fond 80 et en l'y fixant par deux vis 84.

La Fig. 11 montre un autre dispositif pour raccorder deux câbles 43a et 43b ayant chacun une fibre optique 4a et 4b. Le dispositif est composé d'une boîte 85 qui est analogue à celle 8 décrite précédemment et qui enferme un boîtier de raccordement élémentaire 1. Comme dans la boîte 8, des espaces convenables entre les extrémités dégainées des câbles 43a et 43b et les petits chants latéraux 21a et 21b de l'embase 2 peuvent être prévus pour loger une ou plusieurs boucles d'aisance des fibres optiques 4a et 4b.

La Fig. 12 montre un dispositif de raccordement multifibre 9 dans lequel des dispositifs de raccordement élémentaires chacun analogues au boîtier 1 décrit précédemment peuvent être empilés deux à deux face à face pour former une barrette. Le dispositif multifibre permet par exemple de raccorder un ensemble en nappe ou ruban, ou en faisceau, de fibres optiques à un autre ensemble analogue de fibres optiques. Chaque ensemble de fibres optiques peut être issu d'un câble ou de plusieurs câbles dans chacun desquels les fibres optiques sont réparties en une ou plusieurs nappes ou autour d'un ou de plusieurs joncs cylindriques, le tout formant un câble composite. Un tel dispositif de raccordement sous forme de barrette peut être enfermé dans une boîte de brassage et de raccordement à grande capacité pour câbles à fibres optiques. Il peut être également prévu pour équiper un répartiteur ou sous-répartiteur d'un central téléphonique. Dans ce cas, chaque boîtier 1 joue le rôle d'une tête de câble qui raccorde une fibre optique d'un câble externe à une fibre optique constituant une jarretière, ou le rôle d'une réglette qui raccorde une fibre optique constituant une jarretière à une fibre optique d'un câble interne desservant l'autocommutateur du central.

Le dispositif de raccordement multifibre 9 illustré à la Fig. 12 comprend un support plan 90 qui est formé par une plaque ou un cadre rectangulaire, et une pluralité de cloisons minces rectangulaires transversales 91, perpendiculaires au support 90. Le chant inférieur de chaque cloison 91 est rendu solidaire de deux rails longitudinaux 92a et 92b sur le support 90 selon des procédés de fixation connus. Par exemple lorsque les cloisons sont prévues amovibles, chaque cloison comporte deux encoches latérales qui s'encliquetent dans les rails 92a et 92b, ou deux fentes latérales qui coulissent entre les rails 92a et 92b et le support 90. Les dimensions d'une cloison sont du même ordre de grandeur que celles des grandes faces 20 et 28 de l'embase du boîtier 1.

Deux cloisons voisines 91 sont séparées par un interstice 93 ayant une épaisseur sensiblement supérieure à celle du boîtier 1, bossages 25a et 25b et languettes 27a et 27b compris. A la base de l'interstice 93, deux petites pattes flexibles coudées 94a et 94b sont fixées à l'une des cloisons voisines. Chaque boîtier 1 s'enfiche ainsi entre deux cloisons voisines 91 et est verrouillé par encliquetage de ses encoches latérales 26a et 26b entre deux pattes flexibles 94a et 94b. Après verrouillage, les bords supérieurs 37a et 37b des branches 30a et 30b des plaques-ressorts des boîtiers 1 débordent de préférence de l'ensemble des cloisons parallèles 91 afin de faciliter l'opération de raccordement de fibres au moyen d'un outil 7.

**Revendications**

1. Dispositif de raccordement d'extrémités de deux fibres optiques comprenant une embase (2) ayant sur une première grande face (20), une rainure (5) de réception des extrémités des fibres pour aligner et abouter les extrémités (40a, 40b) des fibres (4a, 4b) de part et d'autre d'un plan de jonction (Y'Y) des faces des extrémités des fibres, et une plaque-ressort coudée (3) ayant de part et d'autre d'un coude (32) une portion flexible (30) au-dessus de la première grande face (20) de l'embase (2) et une seconde portion (32) en contact avec l'embase (2), caractérisé en ce que la portion flexible (30) de la plaque-ressort (3) s'étend transversalement au-dessus de la rainure (5) et a un bord (37) à l'opposé du coude (32) qui est libre et accessible au-dessus de l'un (29') de deux chants (29', 29) de l'embase (2) de part et d'autre de la rainure (5) pour écarter seulement la portion flexible (30) devant la première grande face (20) de l'embase (2) lors de l'introduction des extrémités (4a, 4b) des fibres dans la rainure (5), en ce que la seconde portion (32) de la plaque-ressort (3) est fixée à l'embase (2), et en ce que la portion flexible (30) presse les extrémités (40a, 40b) des fibres (4a, 4b) dans la rainure (5) au moins à proximité immédiate du plan de jonction (Y'Y).

2. Dispositif conforme à la revendication 1, caractérisé en ce que la plaque-ressort (3) a une section en U ayant deux branches (30 ; 31) formant ladite portion flexible et ladite seconde portion, lesdites branches enserrant les grandes faces (20, 28) de l'embase (2) dans la première (20) desquelles est prévue la rainure (5).

3. Dispositif conforme à la revendication 2, caractérisé en ce qu'un bord libre (34) de la seconde branche (31) à l'opposé du coude et le coude (32) de la plaque-ressort (3) enserrent les deux chants (29, 29') de l'embase (2) de part et d'autre de la rainure (5).

4. Dispositif conforme à l'une des revendications 1 à 3, caractérisé en ce que la plaque-ressort (3) est pratiquement contenue dans l'enveloppe de l'embase (2).

5. Dispositif conforme à l'une des revendications 1 à 4, caractérisé en ce que dans la portion flexible (30) de la plaque-ressort (3) sont prévus des trous de centrage (33a, 33b) traversés par des saillies de centrage (24a, 24b) sur la grande face rainurée (20) de l'embase (2) entre la rainure (5) et le coude (32) de la plaque-ressort.

6. Dispositif conforme à la revendication 5, caractérisé en ce qu'il comprend au moins une plaquette (60) et au moins une lamelle galbée (61) intercalées entre la grande face rainurée (20) de l'embase (2) et la portion flexible (30) de la plaque-ressort (3) et pourvues chacune de trous de centrage (62a, 62b ; 63a, 63b) traversés par les saillies de centrage (24a, 24b), la lamelle (61) ayant une face convexe poussant la plaquette (60) vers la rainure (5) contenant les extrémités des fibres (4a, 4b).

7. Dispositif conforme à l'une des revendications 1 à 6, caractérisé en ce que la portion flexible (30) de la plaque-ressort (3) est partagée de part et d'autre du plan de jonction (Y'Y) des faces des extrémités (40a ; 40b) des fibres (4a ; 4b) en deux branches flexibles individuellement (30a ; 30b) perpendiculaires à la rainure (5) qui appliquent chacune par sa flexion propre l'extrémité (40a ; 40b) de la fibre optique respective (4a ; 4b) dans la rainure (5).

8. Dispositif conforme à la revendication 7, caractérisé en ce que chaque branche flexible (30a ; 30b) est partagée en au moins deux branches flexibles individuellement (35a ; 35b) perpendiculaires à la rainure (5) qui appliquent chacune par sa flexion propre des tronçons respectifs (40a, 41a ; 40b, 41b) de l'extrémité de la fibre optique respective (4a ; 4b) dans des tronçons respectifs (50, 51a ; 50, 51b) de la rainure (5).

9. Dispositif conforme à l'une des revendications 1 à 8, caractérisé en ce que le bord libre (37) de la portion flexible (30) de la plaque-ressort (3) est en vis-à-vis d'une surface (23') de la grande face rainurée (20) de l'embase (2) en retrait par rapport à la rainure (5) afin d'introduire entre ledit bord libre (37) et ladite surface en retrait (23') un outil (7) pour écarter ladite portion flexible (30) de la plaque-ressort à l'encontre de sa flexion propre en vue d'introduire les extrémités des fibres optiques (4a, 4b) dans la rainure (5).

10. Dispositif conforme à l'une des revendications 1 à 9, caractérisé en ce que la plaque-ressort est constituée par deux plaques-ressorts identiques (3a, 3b) qui sont disposées coplanairement de part et d'autre du plan de jonction (Y'Y) des faces des extrémités (40a ; 40b) des fibres optiques (4a ; 4b), à proximité immédiate du plan de jonction (Y'Y).

11. Dispositif conforme à l'une des revendications 1 à 10, dans lequel un gel est au contact avec au moins les faces des extrémités (40a ; 40b) des fibres (4a, 4b) et remplit sensiblement l'espace entre l'embase (2) et la portion flexible (30) de la plaque-ressort (3) au niveau de la rainure (5), caractérisé en ce que le gel ne coule pas par son propre poids et ne s'échappe pas des ouvertures (53a, 53b, 36, 38) du dispositif (1).

12. Dispositif conforme à la revendication 11, caractérisé en ce que le gel n'est pas entraîné vers l'extérieur du dispositif (1) lors du retrait des extrémités des fibres (4a, 4b) de la rainure (5).

13. Dispositif conforme à la revendication 11 ou 12, caractérisé en ce que le gel est auto-nettoyant des extrémités (40a, 40b) des fibres (4a, 4b).

14. Dispositif de raccordement (8) de deux câbles (42a ; 42b) ayant chacun deux fibres optiques (4a, 4b), caractérisé en ce qu'il comprend une boîte (80) dans laquelle sont juxtaposés tête-bêche deux dispositifs de raccordement élémentaires (1) conformes à l'une des revendications 1 à 13 pour raccorder chacun une fibre (4a) de l'un (42a) des câbles à une fibre (4b) de l'autre câble (42b).

15. Dispositif de raccordement (9) de deux ensembles de fibres optiques deux à deux, caractérisé en ce qu'il est formé par l'empilement de dispositifs de raccordement élémentaires (1) conformes à l'une des revendications 1 à 13, les grandes faces (20, 28) des embases (2) des dispositifs de raccordement élémentaires (1) étant disposées parallèlement.

16. Dispositif conforme à la revendication 15, caractérisé en ce qu'il comprend un support plan (90) supportant des cloisons parallèles (91), de préférence amovibles, entre lesquelles s'enfichent les embases (2) des dispositifs de raccordement élémentaires (1).

17. Dispositif conforme à la revendication 16, caractérisé en ce qu'entre deux cloisons voisines (91) le support (90) comporte des pattes (94a, 94b), bossages ou analogues flexibles pour coopérer avec deux encoches (26a, 26b) dans deux chants (21a, 21b) de l'embase enfichée (2) d'un dispositif de raccordement élémentaire (1) et ainsi verrouiller l'embase (2), lesdits chants (21a, 21b) à encoches (26a, 26b) étant sensiblement perpendiculaires à la rainure (5) de l'embase (2).

18. Dispositif conforme à l'une des revendications 15 à 17, caractérisé en ce que les embases (2) adjacentes empilées de deux dispositifs de raccordement élémentaires (1) sont disposées tête-bêche.

**Claims**

1. Device for connecting ends of two optical fibers comprising a base member (2) including on a first major side (20), a fiber end-receiving groove (5) for aligning and abutting the ends (40a, 40b) of the fibers (4a, 4b) on either side of a fiber endface connection plane (Y',Y) and a bent spring fastener (3) having on either side of a fastener bend (32) a flexible portion (30) above the first major side (20) of the base member (2) and a second portion (32) contacting the base member (2), characterized in that the flexible portion (30) of the spring fastener (3) extends transversely above the groove (5) and has one edge (37) opposite the fastener bend (32) which is free and accessible from one (29') of the two edges (29', 29) of the base member (2) on either side of the groove (5) to deflect only the flexible portion (30) in front of the first major side (20) of the base member (2) when the ends (4a, 4b) of the fibers are inserted in the groove (5), in that the second portion (32) of the spring fastener (3) is anchored to the base member (2), and in that the flexible portion (30) presses the ends (40a, 40b) of the fibers (4a, 4b) into the groove (5) at least in the immediate vicinity of the connection plane (Y'Y).

2. Device according to claim 1, characterized in that the spring fastener (3) has a U-shaped transverse cross-section with two arms (30 ; 31) forming said flexible portion and said second portion, said arms embracing the major sides (20, 28) of the base member (2) whose the first (20) is provided with the groove (5).

3. Device according to claim 2, characterized in that a free edge (34) of the second arm (31) opposite the bend and the bend (32) of the spring fastener (3) embrace two edges (29, 29') of the base member (2) on either side of the groove (5).

4. Device according to one of claims 1 to 3, characterized in that the spring fastener (3) is substantially contained in the envelope of the base member (2).

5. Device according to one of claims 1 to 4, characterized in that the flexible portion (30) of the spring fastener (3) includes locating holes (33a, 33b) in which locating studs (24a, 24b) on the grooved major side (20) of the base member (2) between the groove (5) and the bend (32) in the spring fastener come through.

6. Device according to claim 5, characterized in that it comprises at least one thin plate (60) and at least one curved leaf (61) interposed between the grooved major face (20) of the base member (2) and the flexible portion (30) of the spring fastener (3) and each having locating holes (62a, 62b ; 63a, 63b) in which the locating studs (24a, 24b) are engaged, the leaf (61) having a convex side pulling the thin plate (60) to the groove (5) containing the ends of the fibers (4a, 4b).

7. Device according to one of claims 1 to 6, characterized in that the flexible portion (30) of the spring fastener (3) is split on either side of the connection plane (Y'Y) of the faces of the ends (40a ; 40b) of the fibers (4a ; 4b) into two individually flexible arms (30a ; 30b) perpendicular to the groove (5) which each through its natural flexion pushes the end (40a ; 40b) of the respective optical fiber (4a ; 4b) into the groove (5).

8. Device according to claim 7, characterized in that each flexible arm (30a ; 30b) is split into at least two individually flexible arms (35a ; 35b) perpendicular to the groove (5) which each through its natural flexion pushes respective sections (40a, 41a ; 40b, 41b) of the end of the respective optical fiber (4a ; 4b) into respective sections (50, 51a ; 50, 51b) of the groove (5).

9. Device according to one of claims 1 to 8, characterized in that the free edge (37) of the flexible portion (30) of the spring fastener (3) lies opposite a surface (23') of the grooved major side (20) of the base member (2) set back from the groove (5) enabling a tool (7) to be inserted between said free edge (37) and said set-back surface (23') to deflect said flexible portion (30) of the spring fastener against its natural flexion there of for inserting the ends of the optical fibers (4a, 4b) in the groove (5).

10. Device according to one of claims 1 to 9, characterized in that the spring fastener consists of two identical spring fasteners (3a, 3b) coplanarly arranged on either side of the connection plane (Y'Y) of the faces of the ends (40a ; 40b) of the optical fibers (4a ; 4b), in the immediate proximity of the connection plane (Y'Y).

11. Device according to one of the claims 1 to 10, in which a space between the base member (2) and the flexible portion (30) of the spring fastener (3) around the groove (5) is substantially filled with a gel at least in contact with the faces of the ends (40a ; 40b) of the fibers (4a, 4b), characterized in that the gel does not run under its own weight and does not ooze out through openings (53a, 53b, 36, 38) in the device (1).

12. Device according to claim 11, characterized in that the gel is not drawn outwards from the device (1) when the ends of the fibers (4a, 4b) are withdrawn from groove (5).

13. Device according to claim 11 or 12, characterized in that the gel acts as a self-cleaning agent for the ends (40a, 40b) of the fibers (4a, 4b).

14. Device (8) for connecting two cables (42a ; 42b) each having two optical fibers (4a, 4b), characterized in that it comprises a case (80) in which two elementary connecting devices (1) according to one of claims 1 to 13 are juxtapozed top-to-bottom for each connecting a fiber (4a) of one (42a) of the cables to a fiber (4b) of the other cable (42b).

15. Device (9) for connecting two by two fibers of two assemblies of optical fibers, characterized in that it is built stacking elementary connecting devices (1) according to one of claims 1 to 13, the major faces (20, 28) of the base members (2) of the elementary connecting devices (1) being set parallel.

16. Device according to claim 15, characterized in that it comprises a planar support (90) carrying parallel partitions (91), preferably removable, between which the base members (2) of the elementary connecting devices (1) are plugged.

17. Device according to claim 16, characterized in that between two neighboring partitions (91) the support (90) comprises flexible tabs 94a, 94b, bosses or the like for cooperating with two notches (26a, 26b) in two edges (21a, 21b) of the plugged-in base member (2) of one elementary connecting device (1) thereby locking the base member (2), said edges (21a, 21b) with notches (26a, 26b) being substantially perpendicular to the groove (5) in the base member (2).

18. Device according to one of claims 15 to 17, characterized in that the adjacent stacked base members (2) of two elementary connecting devices (1) are arranged top-to-bottom.

**Patentansprüche**

1. Vorrichtung zum Verbinden der Enden von zwei optischen Fasern, umfassend eine Befestigungsplatte (2), die auf einer großen Fläche (20) eine Nut (5) zur Aufnahme der Enden der Fasern zur Ausrichtung und zum Aneinanderfügen der Enden (40a, 40b) der Fasern (4a, 4b) auf beiden Seiten einer Verbindungsebene (Y'Y) der Flächen der Enden der Fasern besitzt, und eine gebogene Plattenfeder (3), die auf beiden Seiten einer Biegung (32) einen flexiblen Abschnitt (30) oberhalb der ersten großen Fläche (20) der Befestigungsplatte (2) und einen zweiten Abschnitt (32) in Kontakt mit der Befestigungsplatte (2) besitzt, dadurch gekennzeichnet, daß der flexible Abschnitt (30) der Plattenfeder (3) sich in Querrichtung oberhalb der Nut (5) erstreckt und eine Kante (37) entgegengesetzt zur Biegung (32) besitzt, die frei und oberhalb der einen (29') von zwei Kanten (29', 29) der Befestigungsplatte (2) auf beiden Seiten der Nut (5) zugänglich ist, um lediglich den flexiblen Abschnitt (30) vor der ersten großen Fläche (20) der Befestigungsplatte (2) zur Zeit der Einführung der Enden (4a, 4b) der Fasern in die Nut (5) zu spreizen, daß der zweite Abschnitt (32) der Plattenfeder (3) an der Befestigungsplatte (2) befestigt ist und daß der flexible Abschnitt (30) einen Druck auf die Enden (40a, 40b) der Fasern (4a, 4b) in der Nut (5) mindestens in unmittelbarer Nähe der Verbindungsebene (Y'Y) ausübt.

2. Vorrichtung nach Anspruch 1, dadurch gekennzeichnet, daß die Plattenfeder (3) einen U-Querschnitt mit zwei Schenkeln (30 ; 31) besitzt, die den flexiblen Abschnitt und den zweiten Abschnitt bilden, wobei die Schenkel die großen Flächen (20, 28) der Befestigungsplatte (2) einschließen, wobei in der ersten (20) derselben die Nut (5) vorgesehen ist.

3. Vorrichtung nach Anspruch 2, dadurch gekennzeichnet, daß eine freie Kante (34) des zweiten Schenkels (31) entgegengesetzt zur Biegung und die Biegung (32) der Plattenfeder (3) die beiden Kanten (29, 29') der Befestigungsplatte (2) auf beiden Seiten der Nut (5) einschließen.

4. Vorrichtung nach einem der Ansprüche 1 bis 3, dadurch gekennzeichnet, daß die Plattenfeder (3) praktisch in der Umhüllung der Befestigungsplatte (2) enthalten ist.

5. Vorrichtung nach einem der Ansprüche 1 bis 4, dadurch gekennzeichnet, daß im flexiblen Abschnitt (30) der Plattenfeder (3) Zentrierlöcher (33a, 33b) vorgesehen sind, die durch Zentriervorsprünge (24a, 24b) auf der großen nutenversehenen Fläche (20) der Befestigungsplatte (2) zwischen der Nut (5) und der Biegung (32) der Plattenfeder vorgesehen sind.

6. Vorrichtung nach Anspruch 5, dadurch gekennzeichnet, daß sie mindestens ein Plättchen (60) und mindestens eine gerundete Lamelle (61) umfaßt, die zwischen der großen nutenversehenen Fläche (20) der Befestigungsplatte (2) und dem flexiblen Abschnitt (30) der Plattenfeder (3) zwischengelegt sind und jeweils mit Zentrierlöchern (62a, 62b ; 63a, 63b) versehen sind, die von Zentriervorsprüngen (24a, 24b) durchquert sind, wobei die Lamelle (61) eine konvexe Seite besitzt, die das Plättchen (60) zur die Enden der Fasern (4a, 4b) enthaltenden Nut (5) hin drückt.

7. Vorrichtung nach einem der Ansprüche 1 bis 6, dadurch gekennzeichnet, daß der flexible Abschnitt (30) der Plattenfeder (3) auf beiden Seiten der Verbindungsebene (Y'Y) der Flächen der Enden (40a ; 40b) der Fasern (4a ; 4b) in zwei senkrecht zur Nut (5) individuell flexible Schenkel (30a, 30b) aufgeteilt ist, die jeweils durch ihre eigene Durchfederung das Ende (40a ; 40b) der jeweiligen optischen Faser (4a ; 4b) in der Nut (5) beaufschlagen.

8. Vorrichtung nach Anspruch 7, dadurch gekennzeichnet, daß jeder flexible Schenkel (30a ; 30b) in mindestens zwei senkrecht zur Nut (5) individuell flexible Abschnitte (35a ; 35b) aufgeteilt ist, die jeweils durch ihre eigene Durchfederung entsprechende Teilstücke (40a, 41a ; 40b, 41b) des Endes der jeweiligen optischen Faser (4a ; 4b) in den entsprechenden Teilstücken (50, 51a ; 50, 51b) der Nut (5) beaufschlagen.

9. Vorrichtung nach einem der Ansprüche 1 bis 8, dadurch gekennzeichnet, daß die freie Kante (37) des flexiblen Abschnitts (30) der Plattenfeder (3) gegenüber einer Oberfläche (23') der großen nutenversehenen Fläche (20) der Befestigungsplatte (2) zurückspringend in bezug auf die Nut (5) ist, um zwischen der freien Kante (37) und der zurückspringenden Oberfläche (23') ein Werkzeug (7) einzuführen, um den flexiblen Abschnitt (30) der Plattenfeder gegen ihre eigene Durchfederung zwecks Einführens der Enden der optischen Fasern (4a, 4b) in die Nut (5) zu spreizen.

10. Vorrichtung nach einem der Ansprüche 1 bis 9, dadurch gekennzeichnet, daß die Plattenfeder durch zwei identische Plattenfedern (3a, 3b) gebildet ist, die koplanar auf beiden Seiten der Verbindungsebene (Y'Y) der Flächen der Enden (40a ; 40b) der optischen Fasern (4a ; 4b) in unmittelbarer Nähe der Verbindungsebene (Y'Y) angeordnet sind.

11. Vorrichtung nach einem der Ansprüche 1 bis 10, bei der ein Gel mit mindestens den Flächen der Enden (40a ; 40b) der Fasern (4a, 4b) in Kontakt ist und im wesentlichen den Zwischenraum zwischen der Befestigungsplatte (2) und dem flexiblen Abschnitt (30) der Plattenfeder (3) in Höhe der Nut (5) ausfüllt, dadurch gekennzeichnet, daß das Gel nicht durch sein Eigengewicht fließt und nicht durch Öffnungen (53a, 53b, 36, 38) der Vorrichtung (1) entweicht.

12. Vorrichtung nach Anspruch 11, dadurch gekennzeichnet, daß das Gel nicht zur Zeit des Rückzugs der Enden der Fasern (4a, 4b) der Nut (5) zur Außenseite der Vorrichtung (1) mitgenommen wird.

13. Vorrichtung nach Anspruch 11 oder 12, dadurch gekennzeichnet, daß das Gel selbstreinigend für die Enden (40a, 40b) der Fasern (4a, 4b) ist.

14. Vorrichtung zur Verbindung (8) von zwei Kabeln (42a ; 42b), die jeweils zwei optische Fasern (4a, 4b) aufweisen, dadurch gekennzeichnet, daß sie ein Gehäuse (80) umfaßt, in dem zwei elementare Verbindungsvorrichtungen (1) nach einem der Ansprüche 1 bis 13 Kopf bei Fuß nebeneinander angeordnet sind, um jeweils eine Faser (4a) des einen (42a) der Kabel mit einer Faser (4b) des anderen Kabels (42b) zu verbinden.

15. Vorrichtung zur paarweisen Verbindung (9) von zwei Sätzen von optischen Fasern, dadurch gekennzeichnet, daß sie durch Aufeinanderlegen von elementaren Verbindungsvorrichtungen (1) gemäß einem der Ansprüche 1 bis 13 gebildet ist, wobei die großen Flächen (20, 28) der Befestigungsplatten (2) der elementaren Verbindungsvorrichtungen (1) parallel angeordnet sind.

16. Vorrichtung nach Anspruch 15, dadurch gekennzeichnet, daß sie einen ebenen Träger (90) umfaßt, der vorzugsweise abnehmbare parallele Zwischenwände (91) trägt, zwischen denen die Befestigungsplatten (2) der elementaren Verbindungsvorrichtungen (1) stecken.

17. Vorrichtung nach Anspruch 16, dadurch gekennzeichnet, daß der Träger (90) zwischen zwei benachbarten Zwischenwänden (91) Klauen (94a, 94b), flexible Wulstvorsprünge oder Analoge zum Zusammenwirken mit zwei Aussparungen (26a, 26b) in den beiden Kanten (21a, 21b) der gesteckten Befestigungsplatte (2) einer elementaren Verbindungsvorrichtung (1) und somit zum Verriegeln der Befestigungsplatte (2) aufweist, wobei die Kanten (21a, 21b) mit Aussparungen (26a, 26b) im wesentlichen senkrecht zur Nut (5) der Befestigungsplatte (2) sind.

18. Vorrichtung nach einem der Ansprüche 15 bis 17, dadurch gekennzeichnet, daß die benachbarten, aufeinander angeordneten Befestigungsplatten (2) von zwei elementaren Verbindungsvorrichtungen (1) Kopf bei Fuß angeordnet sind.

**FIG.7**

**FIG.6A**

**FIG.2**

**FIG.1**

0 116 481

FIG.3

FIG.5

FIG.4

FIG.6B

FIG.8A

FIG.8B

FIG.12

# FIG. 9

0 116 481

# FIG.11

# FIG.10